# EUROPÄISCHE PATENTSCHRIFT

(11) **EP 3 882 002 B1**
(45) Veröffentlichungstag und Bekanntmachung des Hinweises auf die Patenterteilung: **29.12.2021**
(21) Anmeldenummer: 20163220.5
(22) Anmeldetag: 16.03.2020
(51) Int. Cl.: B29C 49/42, B65D 1/20, B65D 51/16, B29C 49/02, B29C 49/04, B29C 49/58

(54) **VERFAHREN ZUR HERSTELLUNG EINES KUNSTSTOFF-KANISTERS UND ENTSPRECHENDER BLASFORM**
METHOD FOR PRODUCING A PLASTIC CANISTER AND CORRESPONDING BLOW MOLD
PROCÉDÉ DE FABRICATION D'UN BIDON EN MATIÈRE PLASTIQUE ET MOULE DE SOUFFLAGE CORRESPONDANT

(43) Veröffentlichungstag der Anmeldung: 22.09.2021
(73) Patentinhaber: Dr. Ing. W. Frohn GmbH & Co KG, 82041 Oberhaching (DE)
(72) Erfinder: FROHN, Eric, 82031 Grünwald (DE)
(74) Vertreter: Hoefer & Partner Patentanwälte mbB

(56) Entgegenhaltungen:
- EP-A1- 0 677 445
- EP-A1- 3 178 629
- DE-U1-202010 007 275
- US-A1- 2012 161 373

## Beschreibung

Die Erfindung betrifft ein Verfahren zur Herstellung eines Kanisters aus Kunststoff. Des Weiteren betrifft die Erfindung eine Blasform zur Herstellung eines Kunststoff-Kanisters. Einen vorbekannten Kanister zeigt beispielsweise die Anmeldung EP 0 677 445 A1.

Bei dem dort offenbarten Kanister handelt es sich um einen Kunststoffkanister mit am Oberboden angeformten und sich vertikal innerhalb der Ausgießöffnung erstreckenden Belüftungskanal zur Ermöglichung gluckerfreien Entleerens. Der dort offenbarte Kanister wird im Extrusions-Blasverfahren unter Verwendung eines Akkumulator-Blaskopfes hergestellt. Dabei fährt der nach unten offene extrudierte Schlauch zwischen den geöffneten Blasformhälften über den darunter positionierten Blasdorn. Vor dem Schließen der Blasformhälften kann der Blasdorn dann innerhalb des plastifizieren Kunststoffschlauches horizontal in die gewünschte, zumeist asymmetrische Position bewegt werden, in der die Ausgießöffnung des Kanisters geformt werden soll. Sodann schließt die Blasform und der plastifizierte Kunststoffschlauch wird innerhalb der Blasform aufgeblasen. Nachteilig bei diesem Verfahren ist allerdings, dass die Extrusion des Schlauches nicht kontinuierlich während des Aufblasprozesses weiterlaufen kann, da sich die Blasform samt Blasdorn während der gesamten Produktionsdauer des Kanisters unmittelbar unter dem Auslass des Akkumulator-Blaskopfes befindet und damit den weiteren Ausstoß eines neuen Schlauches behindert. Zur Aufblasdauer des Kanisters kommt somit immer die Dauer des Schlauchausstoßes hinzu, was die Gesamtproduktionsdauer des Kanisters verlängert.

EP 3 178 629 A1 zeigt ein Blasformverfahren zur Herstellung eines hohlen Gegenstandes. Gezeigt wird das Positionieren eines extrudierten Schlauches in einer geöffneten Blasform. Der Schlauch wird dabei mit einem Schlauchgreifer zum Einklemmen und Offenhalten des Schlauches an seiner Oberseite gegriffen. Der gegriffene Schlauch wird oberhalb des Schlauchgreifers abgetrennt und horizontal verfahren. Von oben wird eine Blasdornanordnung in die Einfahröffnung eingefahren und es folgt ein Aufblasen des Vorformlings in der Blasform zu einem hohlen Gegenstand.

Ferner zeigt diese Druckschrift eine Blasform nach dem Oberbegriff des Anspruchs 10. Vorbenannter Kanister mit einem sich innerhalb der Ausgießöffnung vertikal erstreckenden Belüftungskanal sowie ein Kanister mit Innengewinde in der Ausgießöffnung kann nicht im schnelleren Blasverfahren der kontinuierlichen Extrusion hergestellt werden. Bei diesem Verfahren wird der extrudierte Schlauch kontinuierlich ausgestoßen. Ist die erforderliche Schlauchlänge erreicht, fahren die in Nachbarposition wartenden geöffneten Blasformhäften vor und hinter den Schlauch, schließen und klemmen diesen dabei ein, um mit dem eingeklemmten Schlauch nach dessen Kappung am Extruder wieder in die Nachbarposition zu fahren. Sodann fährt von oben ein entsprechender Blasdorn vertikal in die aus der Blasform ausgesparte Öffnung, teilt dabei den eingeklemmten Schlauch, formt so die KanisterAusgießöffnung und bläst den Schlauch auf.

Beim Teilen des Schlauches wird durch den vertikal eindringenden Blasdorn überschüssiges plastifiziertes Material nach unten in das Innere des produzierten Kanisters geschoben, welches bei einer Kanisterausgießöffnung mit innerhalb dieser angeformten Belüftungskanals ein Verschließen desselben zur Folge hat oder bei einer Mündung mit Innengewinde die Gewindegänge beschädigt.

Es ist Aufgabe vorliegender Erfindung, ein Verfahren zum Herstellen eines blasgeformten Kunststoff-Kanisters mit sich vertikal innerhalb der Ausgießöffnung erstreckenden Belüftungskanals oder einer Ausgießöffnung mit Innengewinde anzugeben, das eine schnelle und einfache Herstellung des solchen Kanisters ermöglicht.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Das erfindungsgemäße Verfahren umfasst zumindest die folgenden Schritte in gegebener Reihenfolge:
**a)** Es erfolgt ein kontinuierliches Extrudieren eines Schlauches aus einem Kunststoff. Hierzu wird in üblicherweise Kunststoffgranulat plastifiziert und durch einen Blaskopf gepresst. Dabei entsteht ein kontinuierlich vorgeschobener, nach unten hängender Schlauch. Das kontinuierliche Extrudieren erfolgt insbesondere ohne Unterbrechung, so dass während des Abnehmens des zur Produktion erforderlichen Schlauchstückes als auch während des Aufblasens desselben, der Schlauch weiterhin extrudiert wird.
**b)** Während des Extrudierens des Schlauches erfolgt ein Positionieren einer geöffneten Blasform um den Schlauch. Diese Blasform umfasst zwei Blasformhälften. In diesen Blasformhälften ist das Formnest für einen Kanister ausgebildet. Die geöffnete Blasform wird unterhalb des Blaskopfes so um den Schlauch herum positioniert, dass sich der Schlauch zwischen den beiden auseinandergefahrenen und somit geöffneten Blasformhälften befindet.
**c)** Im nächsten Schritt erfolgt nicht wie üblich ein Schließen der Blasform bzw. der Blasformhälften. Vielmehr ist an der Blasform ein Schlauchgreifer vorgesehen. Dieser Schlauchgreifer ist zum Einklemmen des Schlauches und gleichzeitigem Offenhalten des Schlauches an seiner Oberseite ausgebildet. Der Schlauchgreifer befindet sich hierzu auf der Oberseite der Blasform und ist zusammen mit der Blasform bewegbar. Zum Einklemmen des Schlauches sind wiederum Bestandteile des Schlauchgreifers relativ zu den beiden Blasformhälften beweglich, so dass ohne Schließen der Blasformhälften der Schlauch mit dem Schlauchgreifer eingeklemmt werden kann. Der Schlauchgreifer klemmt dabei den Schlauch nicht über seinen gesamten Querschnitt, sondern lediglich an der Seite, so dass der Schlauch an seiner Oberseite offen bleibt. Diese Öffnung wird als "Einfahröffnung" bezeichnet, da über diese Öffnung später die Blasanordnung einfährt. Erfindungsgemäß klemmt der Schlauchgreifer den Schlauch mit zwei Greifbereichen an zwei voneinander beabstandeten Stellen, sodass die Einfahröffnung einen ovalen Querschnitt aufweist.
**d)** Im nächsten Schritt erfolgt ein Trennen des Schlauches oberhalb des Schlauchgreifers, so dass der Vorformling vom kontinuierlich extrudierenden Schlauch abgetrennt wird. Nach dem Trennen hängt der Vorformling in der geöffneten Blasform; gehalten durch den geschlossenen Schlauchgreifer. Das Trennen bzw. die Trennvorrichtung ist so ausgestaltet, dass der Schlauch gleichzeitig getrennt und darüber geschlossen wird, so dass der nächste Vorformling an seiner Unterseite geschlossen ist.
**e)** Da der Schlauch kontinuierlich weiter extrudiert wird und sich dadurch nach unten ausbreitet, wird die Blasform samt darin hängendem Vorformling horizontal in eine sog. "Blasposition" verfahren. In dieser Blasposition befindet sich die Blasform außerhalb des Bereiches unter dem Blaskopf.
**f)** Die Blasform ist in der Blasposition zunächst immer noch geöffnet. Es erfolgt nun das Einfahren des Blasdornes von oben in die Einfahröffnung des Vorformlings. Hier zeigt sich ein wesentlicher Vorteil der Erfindung: Gäbe es keinen Schlauchgreifer, der den Vorformling mit der Einfahröffnung offen hält, wäre zu diesem Zeitpunkt die Blasform geschlossen, um so den Vorformling zu fixieren und in die Blasposition zu verschieben. Würde nun die Blasanordnung von oben in die für den Stutzen des Kanisters formgebende Öffnung einfahren, so käme es, aufgrund dieser relativ engen Öffnung, zu einem Verschieben bzw. Schoppen des Materials (Kunststoff) nach unten. Dadurch könnte sich im unteren Bereich des Stutzens eine Materialanhäufung ergeben. Dies ist insbesondere nachteilig bei Ausformung eines Belüftungskanals im Stutzen mittels eines relativ kleinen Nebendorns. Dieser relativ kleine Nebendorn zur Ausbildung des Belüftungskanals mit relativ kleinem Durchmesser könnte bei Schoppen des Materials zu einer signifikanten Einengung oder Verschließung des Belüftungskanals führen. Ebenso wäre dies nachteilig bei der Produktion einer Mündung mit Innengewinde, da die Gewindegänge so verletzt werden können. Um eben diese Nachteile zu vermeiden, wird die Blasform zunächst nicht geschlossen, sondern der Vorformling nur mittels des Schlauchgreifers gehalten. Dabei verbleibt die Einfahröffnung auf der Oberseite des Schlauches, die wesentlich größer ist als die für den Stutzen formgebende Öffnung der Blasform. Insbesondere ist vorgesehen, dass die offen gehaltene Einfahröffnung zumindest die doppelte Fläche der für den Stutzen formgebenden Öffnung des Blaswerkzeugs aufweist. So kann der Blasdorn ohne Kontakt mit dem Vorformling einfahren.
**g)** Im darauffolgenden Schritt, wenn der Blasdorn bereits in die Einfahröffnung des Vorformlings eingefahren ist, erfolgt erst das vollständige Schließen der Blasformhälften bzw. der Blasform.
**h)** Nach dem vollständigen Schließen der Blasformhälften erfolgt das Aufblasen des Vorformlings in der Blasform zu einem Kanister. Hierzu wird über den Blasdorn Druckluft ins Innere des Vorformlings eingeblasen, so dass sich der Schlauch an die Innenseite des Formnestes in der Blasform anlegt.

In nachfolgenden Schritten kann auf übliche Weise ein Öffnen der Blasform und ein Entnehmen des Kanisters erfolgen.

Während all dieser Verfahrensschritte wird der Schlauch am Extrusionskopf weiter extrudiert, so dass nach der Entnahme des Kanisters die geöffnete Blasform wieder horizontal unter den Schlauchkopf verfahren wird, um mit dem Schlauchgreifer den nächsten Vorformling zu greifen. Es ergibt sich ein kontinuierliches Verfahren, bei dem stetig extrudiert wird und so möglichst schnell und prozesssicher Kanister hergestellt werden können.

Die hier beschriebene "geöffnete" Blasform bzw. "geöffnete" Blasformhälfte bezeichnen einen Zustand der Blasform, bei der die Blasformhälften zumindest nicht vollständig geschlossen sind. Insbesondere sind die beiden Blasformhälften zumindest so weit auseinandergefahren, dass der Vorformling mit ausreichend großer Einführöffnung dazwischen hängen kann.

Der mit dem erfindungsgemäßen Verfahren hergestellte Kanister weist insbesondere folgende Merkmale auf. Bevorzugt umfasst der Kanister einen Stutzen zum Ein- und Ausgießen. In diesen Stutzen ragt bevorzugt ein Belüftungskanal. Der Belüftungskanal wiederum umfasst vorzugsweise einen horizontalen Abschnitt und einen vertikalen Abschnitt. Der vertikale Abschnitt des Belüftungskanals erstreckt sich vorzugsweise in den Stutzen hinein und endet bevorzugt unter dem oberen Abschluss des Stutzens.

Dadurch ergeben sich in dem Stutzen zwei Öffnungen, nämlich eine Hauptöffnung, durch die Flüssigkeit in einen Innenraum des Kanisters eingegossen und wieder ausgegossen werden kann und eine Belüftungsöffnung, die durch den vertikalen Abschnitt des Belüftungskanals gebildet ist. Der Belüftungskanal führt über den horizontalen Abschnitt zu einem hinteren Bereich des Innenraums. Sinn und Zweck des Belüftungskanals sind in EP 0 677 445 A1 ausführlich beschrieben.

Die im Rahmen des Verfahrens verwendete Blasdornanordnung umfasst vorzugsweise einen Hauptblasdorn und einen Nebenblasdorn. Zwischen Hauptblasdorn und Nebenblasdorn ist vorzugsweise ein Quetschkantenspalt vorgesehen. Die beiden Blasformhälften weisen eine Quetschkante auf. Die beiden gegenüberliegenden Quetschkanten der beiden Blasformhälften ragen bei geschlossener Blasform in diesen Quetschkantenspalt zwischen Hauptblasdorn und Nebenblasdorn, so dass im Bereich des Stutzens eine innere Kanalwandung des Belüftungskanals entsteht. Dieses Quetschen zur Bildung der inneren Kanalwandung erfolgt allerdings erst, nachdem sich die Blasdornanordnung bereits im Vorformling an Ort und Stelle befindet, so dass während des Schließens der beiden Blasformhälften sowohl der Hauptblasdorn als auch der Nebenblasdorn formgebend für die Hauptöffnung und die Belüftungsöffnung im Stutzen des Kanisters sind.

Der Schlauchgreifer umfasst Greifelemente. Als Greifelemente werden beim Schlauchgreifer die Teile bezeichnet, die relativ zu den Blasformhälften verfahrbar sind, um so den Schlauch zwischen den Greifelementen einzuklemmen. Entsprechend befindet sich auch auf jeder Blasformhälfte zumindest ein Greifelement. Das jeweilige Greifelement ist auf seiner Blasformhälfte beweglich geführt, so dass die Greifelemente in Formschließrichtung der Blasform aufeinander zubewegbar sind.

An den Greifelementen sind Greifbereiche definiert, die den tatsächlichen Kontakt zum Schlauch bilden. Ein Greifbereich besteht jeweils aus zwei gegenüberliegenden, zueinander komplementären Flächen zweier Greifelemente. So ist vorgesehen, dass der Schlauchgreifer zumindest zwei voneinander beabstandete Greifbereiche umfasst. An jedem Greifbereich wird der Schlauch eingeklemmt. Dadurch, dass die beiden Greifbereiche voneinander beabstandet sind, verbleibt zwischen den beiden Greifbereichen die beschriebene Einführöffnung. Bevorzugt ist vorgesehen, dass die Greifelemente in Formschließrichtung mittels Federn federbelastet sind. Insbesondere ist pro Greifelement zumindest eine Feder vorgesehen, die im gespannten Zustand das Greifelement in Richtung Schlauch drückt, so dass der Schlauch eingeklemmt werden kann. Zum Halten der Greifelemente in der geöffneten, also zurückgezogenen Position und somit zum Halten der Greifelemente entgegen der Federkraft, ist insbesondere auf jeder Blasformhälfte zumindest eine Haltevorrichtung vorgesehen. Diese Haltevorrichtung kann das entsprechende Greifelement halten oder kann auf andere Weise das Entspannen der Feder blockieren, so dass sich der Schlauchgreifer nicht schließt. Die Haltevorrichtungen sind vorzugsweise hydraulisch oder pneumatisch ausgebildet, beispielsweise als Hydraulikzylinder oder Pneumatikzylinder. Die Federn können Spiralfedern oder sonstige Energiespeicher sein, beispielsweise auch hydraulische oder pneumatische Energiespeicher.

Bei dem Verfahrensablauf ist vorgesehen, dass beim Schließen der Blasformhälften die Federn gespannt werden. Dies ist auf einfache Weise möglich, da vor dem Schließen der Blasformhälften ohnehin die Greifelemente geschlossen sind und dabei den Vorformling einklemmen. Werden nun auch noch die Blasformhälften aufeinander zubewegt, so spannen sich dadurch automatisch die Federn wieder auf. Beim anschließenden Öffnen der Blasformhälften werden die Federn in dem gespannten Zustand gehalten, insbesondere durch die oben aufgeführten Haltevorrichtungen.

In einer Variante ist vorgesehen, dass die einzelnen Greifelemente jeweils zweiteilig sind. Darüber hinaus ist insbesondere vorgesehen, dass die beiden Teile des jeweiligen Greifelements in horizontaler Richtung senkrecht zur Formschließrichtung verfahrbar sind. Dadurch ist es möglich, dass die beiden Greifbereiche nach dem Einklemmen zur Formveränderung der Einfahröffnung aufeinander zu verfahren werden können. Beim Klemmen des Schlauches bzw. Vorformlings mit dem Schlauchgreifer bildet sich erfindungsgemäß eine im Wesentlichen ovale Einfahröffnung zwischen den beiden Greifbereichen.

Des Weiteren ist bevorzugt vorgesehen, dass in den Vorformling vor dem Schließen der Blasformhälften, also beispielsweise während des horizontalen Verfahrens der Blasform zur Blasposition oder in der Blasposition, Druckluft zum Vorblasen eingeblasen wird. Dieses Vorblasen kann auch als "Vorrecken" bezeichnet werden. Besonders bevorzugt befindet sich am Schlauchgreifer, insbesondere an einer der Greifelemente, zumindest eine Druckluftdüse, über die Luft zum Vorblasen des Vorformlings eingeblasen werden kann, noch bevor die Blasformhälften geschlossen werden.

Des Weiteren ist bevorzugt vorgesehen, dass der Vorformling beim Vorblasen über das Innenformmaß der Blasform hinaus aufgeblasen wird. Bis zum Schließen der Blasform orientiert sich der Vorformling wieder etwas zurück, so dass er in das Formnest passt.

Des Weiteren kann bei dem erfindungsgemäßen Verfahren ein Verfahren der Blasdornanordnung nach dem Einfahren in die Einfahröffnung und vor dem Schließen der Blasformhälften in horizontaler Richtung erfolgen. Dies ermöglicht beispielsweise einen sehr weit außen liegenden Stutzen des Kanisters.

Des Weiteren ist bevorzugt vorgesehen, dass der Nebendorn der Blasdornanordnung an seiner Unterseite zumindest einen schräg angeordneten Druckluftauslass aufweist. Durch diesen Druckluftauslass kann beim Aufblasen des Kanisters die Druckluft nicht nur senkrecht nach unten, sondern auch seitlich auf das Material (Kunststoff) geblasen werden. Dadurch ist es möglich, zur Unterstützung der Formgebung Material wegzublasen, das beim Schließen der beiden Blasformhälften in den Belüftungskanal gedrängt wurde.

Die Erfindung umfasst ferner eine Blasform zum Herstellen eines Kanisters. Insbesondere handelt es sich dabei um den bereits oben beschriebenen Kanister. Die Blasform wird insbesondere zur Durchführung des Verfahrens verwendet. Dabei versteht sich, dass zur Durchführung des Verfahrens nicht nur die Blasform, sondern auch weitere Elemente, insbesondere der Blaskopf zum Extrudieren des Schlauches, angewendet werden können. Die erfindungsgemäße Blasform umfasst zwei Blasformhälften, die mit ihrem Formnest formgebend für den Kanister sind. Die beiden Blasformhälften können Schieber aufweisen, um der Geometrie des gewünschten Kanisters Rechnung zu tragen.

Auf den Blasformhälften befindet sich der bereits beschriebene Schlauchgreifer mit seinen beiden Greifelementen. Auf jeder Blasformhälfte befindet sich zumindest ein Greifelement. Die Greifelemente sind parallel zur Formschließrichtung und relativ zur jeweiligen Blasformhälfte verfahrbar, so dass der zwischen den geöffneten Blasformhälften angeordnete Schlauch von den Greifelementen einklemmbar ist, ohne dass dabei die Blasformhälften vollständig geschlossen werden müssen.

Die im Rahmen des erfindungsgemäßen Verfahren beschriebenen vorteilhaften Ausgestaltungen und Unteransprüche finden entsprechend vorteilhafte Anwendungen auf die erfindungsgemäße Blasform.

Es ist vorgesehen, dass der Schlauchgreifer zwei Greifbereiche aufweist. Der jeweilige Greifbereich ist durch zwei aufeinander zu bewegbare, gegenüberliegende Flächen zweier Greifelemente gebildet. Wie beschrieben, sind diese beiden Greifbereiche voneinander beabstandet, so dass sich eine Einfahröffnung im Schlauch ergibt, wenn dieser vom Schlauchgreifer geklemmt wird. Pro Greifelement umfasst der Schlauchgreifer vorzugsweise zumindest eine Feder. Diese Feder ist, wie bereits beschrieben, als beliebiger Energiespeicher, beispielsweise als Spiralfeder oder auf sonstige Weise ausgebildet.

Die Federn beaufschlagen die Greifelemente aufeinander zu, so dass mittels der Federkraft sich die Greifelemente zum Einklemmen des Schlauches schließen.

Ferner umfasst der Schlauchgreifer Haltevorrichtungen, die dazu ausgebildet sind, die Greifelemente in der offenen, federbelasteten Stellung zu halten. Diese Haltevorrichtungen sind beispielsweise Hydraulik- oder Pneumatikzylinder.

Besonders bevorzugt handelt es sich bei den Haltevorrichtungen um doppelt wirkende Zylinder, so dass durch entsprechende Druckbeaufschlagung der Zylinder zum einen das Offenhalten entgegen der Federkraft und zum anderen ein die Federkraft unterstützendes Schließen der Greifelemente ermöglicht ist.

Weitere Einzelheiten, Vorteile und Merkmale der vorliegenden Erfindung ergeben sich aus nachfolgender Beschreibung eines Ausführungsbeispiels anhand der Zeichnungen. Es zeigt:
- Fig. 1: eine schematische Ansicht zur Erläuterung des erfindungsgemäßen Verfahrens gemäß einem Ausführungsbeispiel,
- Fig. 2: eine Draufsicht auf eine erfindungsgemäße Blasform zur Durchführung des erfindungsgemäßen Verfahrens gemäß dem Ausführungsbeispiel,
- Fig. 3: eine Draufsicht auf die geschlossene Blasform aus Fig. 2,
- Fig. 4: eine Draufsicht auf eine Variante der Blasform aus Fig. 2,
- Fig. 5: eine Draufsicht auf einen Kanister, hergestellt nach dem erfindungsgemäßen Verfahren gemäß dem Ausführungsbeispiel,
- Fig. 6: den in Fig. 5 gekennzeichneten Schnitt A-A,
- Fig. 7: eine Detailansicht der erfindungsgemäßen Blasform zur Durchführung des erfindungsgemäßen Verfahrens gemäß dem Ausführungsbeispiel,
- Fig. 8: eine Detailansicht einer Blasdornanordnung zur Durchführung des erfindungsgemäßen Verfahrens gemäß dem Ausführungsbeispiel, und
- Fig. 9: den in Fig. 8 dargestellten Schnitt B-B.

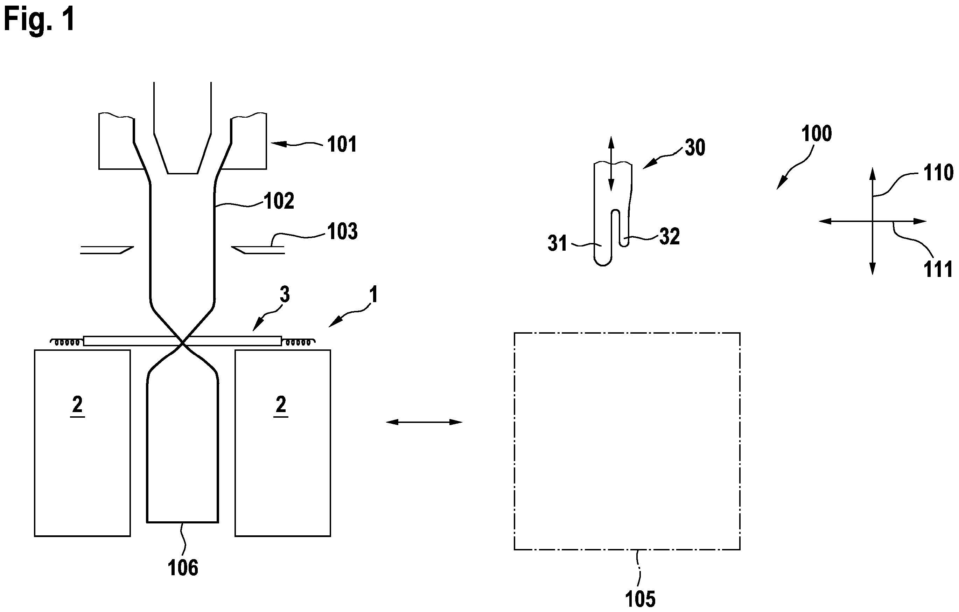

Im Folgenden wir anhand der Fig. 1 bis 9 das erfindungsgemäße Verfahren zur Herstellung eines Kanisters 50 unter Verwendung einer erfindungsgemäßen Blasform 1 im Detail erläutert. Dabei wird, soweit nicht im Detail anders erwähnt, stets auf alle Figuren Bezug genommen. Fig. 1 zeigt eine Anordnung 100, die bei der Durchführung des Verfahrens zur Anwendung kommen kann. Die Darstellung ist dabei rein schematisch.

Die Anordnung 100 umfasst einen Blaskopf 101, mit dem kontinuierlich ein Schlauch 102 aus Kunststoff extruiert wird. Der Schlauch 102 hängt dabei vom Blaskopf 101 entlang der Vertikalen 110 nach unten.

Des Weiteren verdeutlicht die schematische Darstellung in Fig. 1, dass die Anordnung 100 eine Blasform 1 umfasst. Diese Blasform 1 wiederum weist zwei gegenüberliegende Blasformhälften 2 auf. Auf diesen Blasformhälften 2 befindet sich ein Schlauchgreifer 3.

Über dem Schlauchgreifer 3 befindet sich eine Trennvorrichtung 103 zum Abtrennen und gleichzeitigem Verschließen des Schlauchs 102.

Im Verfahrensablauf erfolgt ein kontinuierliches Extrudieren des Schlauches 102. Regelmäßig wird dabei die Blasform 1 mit geöffneten Blasformhälften 2 an dem Schlauch 102 positioniert. Daraufhin werden die Blasformhälften 2 nicht geschlossen, sondern der Schlauch 102 wird lediglich mit dem Schlauchgreifer 3 geklemmt. Über dem Schlaugreifer 3 wird daraufhin mit der Trennvorrichtung 103 der Schlauch 102 abgetrennt, so dass der Vorformling 106 verbleibt, der zwischen den beiden Blasformhälften 2 hängt. Ohne die Blasformhälften 2 zu schließen, wird die Blasform 1 samt darin hängendem Vorformling 106 entlang der Horizontalen 111 in eine Blasposition 105 verschoben. Dadurch befindet sich die Blasform 1 nicht mehr unter den kontinuierlich weiter extrudierenden Schlauch 102.

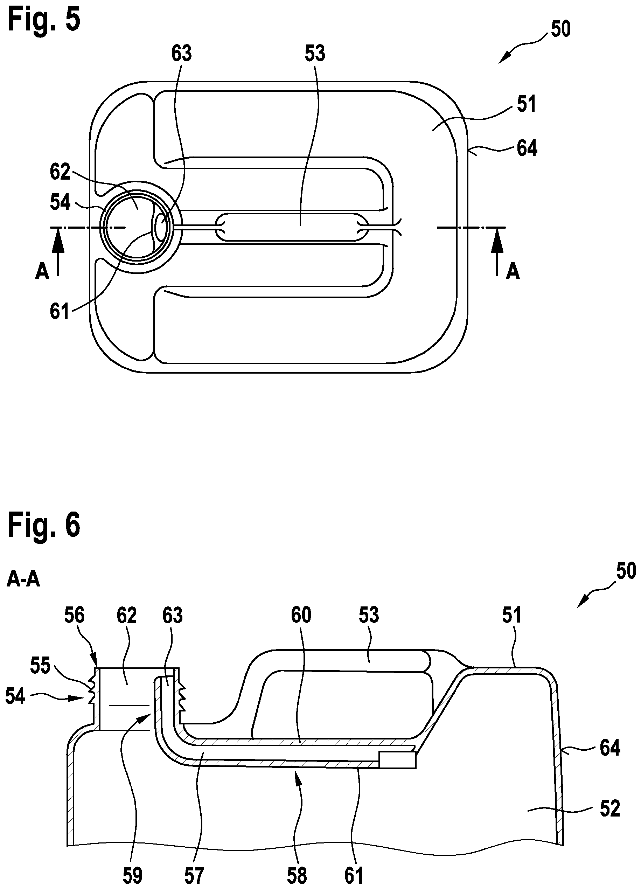

An der Blasposition 105 wird die in Fig. 1 rein schematisch dargestellte Blasdornanordnung 30 durch Verfahren entlang der Vertikalen 110 in den Vorformling 106 eingefahren. Daraufhin erfolgt ein Schließen der Blasformhälften 2 und ein Aufblasen des Vorformlings 106 zum Kanister 50, wie er beispielsweise in Fig. 5 und 6 gezeigt ist.

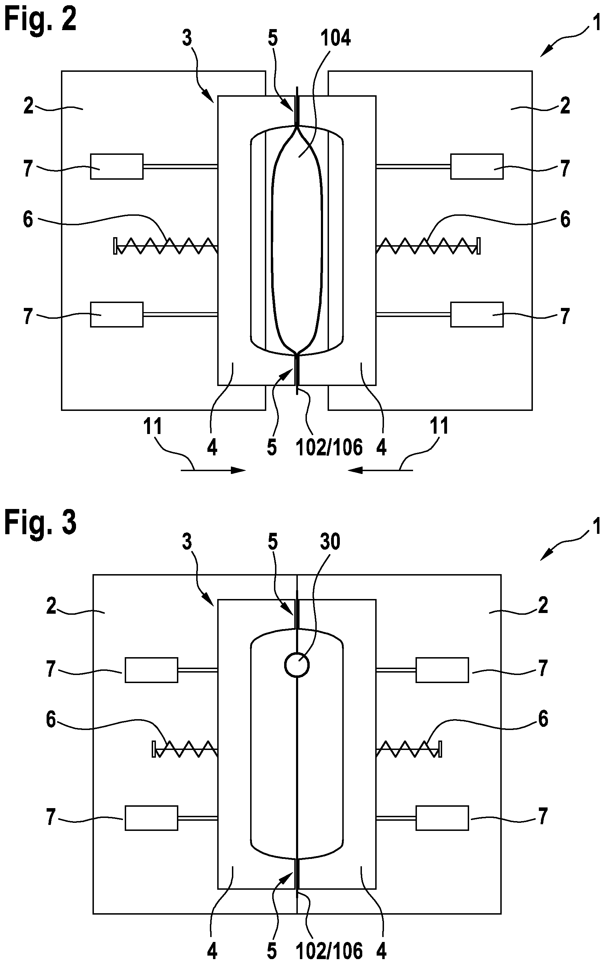

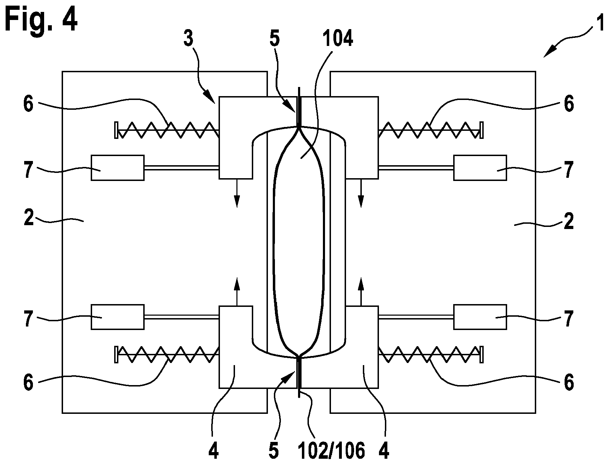

Im Folgenden wird anhand der Fig. 2 bis 4 der schematische Aufbau der Blasform 1 im Detail erläutert. Fig. 2 zeigt eine Draufsicht auf die geöffnete Blasform 1. Fig. 3 zeigt eine Draufsicht auf die geschlossene Blasform 1. Fig. 4 zeigt eine Draufsicht auf eine alternative Ausbildung der Blasform 1, dargestellt im geöffneten Zustand.

Wie bereits beschrieben, umfasst die Blasform 1 zwei Blasformhälften 2 und einen Schlauchgreifer 3. Der Schlauchgreifer 3 wiederum umfasst zwei Greifelemente 4. Auf jeder Blasformhälfte 2 ist ein Greifelement 4 auf der Oberseite angeordnet. Jedes Greifelement 4 ist entlang der Horizontalen 111 parallel zur Formschließrichtung 11 relativ zur Blasformhälfte 2 beweglich. In den Fig. 2 bis 4 ist der Schlauchgreifer 3 jeweils geschlossen. Die beiden gegenüberliegenden Greifelemente 4 sind aufeinander zugefahren. An zwei beabstandeten Greifbereichen 5 ist der Schlauch 102 bzw. der Vorformling 106 eingeklemmt. Dadurch, dass die beiden Greifbereiche 5 voneinander beabstandet sind, verbleibt zwischen den beiden Greifbereichen 5 eine Einfahröffnung 104 im Schlauch 102 bzw. Vorformling 106. Durch diese Einfahröffnung 104 kann an der Blasposition 105 die Blasdornanordnung 30 eingefahren werden, noch bevor die Blasformhälften 2 entlang der Formschließrichtung 11 geschlossen werden.

Die Fig. 2 bis 4 zeigen rein schematisch, dass die Greifelemente 4 in Richtung ihrer Schließstellung mittels Federn 6 beaufschlagt sind. Diese Federn 6 drücken die Greifelemente 4 aufeinander zu. Mittels Haltevorrichtungen 7, beispielsweise ausgebildet als Pneumatik- oder Hydraulikzylinder, können die Greifelemente 4 in ihrer offenen Stellung entgegen der Federkraft gehalten werden.

Fig. 3 zeigt in Draufsicht die Blasform 1 in geschlossener Stellung. Dabei sind die Blasformhälften 2 vollständig geschlossen. Dadurch hat sich die Einführöffnung 104 verschlossen. Die Blasdornanordnung 30 ragt von oben in den Vorformling 106 hinein.

Fig. 4 zeigt eine Variante, bei der die Greifelemente 4 auf den jeweiligen Blasformhälften 2 zweiteilig ausgestaltet sind. Die Greifelemente 4 sind dabei derart aufeinander zu verfahrbar, so dass die Greifbereiche 5 aufeinander zu bewegt werden können. Dadurch kann die ovale Form der Einfahröffnung 104 hin zu einer runderen Form verändert werden.

Fig. 5 zeigt eine Draufsicht auf den Kanister 50, der mit der Anordnung 100 bzw. der Blasform 1 hergestellt wird. Fig. 6 zeigt den in Fig. 5 gekennzeichneten Schnitt A-A.

Demgemäß umfasst der Kanister 50 einen Oberboden 51 und einen gegenüberliegenden, nicht dargestellten Unterboden. Oberboden 51 und Unterboden sind über eine Mantelfläche 64 des Kanisters 50 verbunden. So bilden Oberboden 51, Unterboden und Mantelfläche 64 einen Innenraum 52 des Kanisters 50 zur Aufnahme einer Flüssigkeit.

Am Oberboden 51 ist ein Griff 53 ausgebildet. Vor dem Griff 53 befindet sich ein Stutzen 54, ausgebildet zum Ein- und Ausgießen der Flüssigkeit in den Innenraum 52 bzw. aus dem Innenraum 52.

Der Stutzen 54 schließt mit einem oberen Abschluss 56 ab. An diesem oberen Abschluss 56 dichtet ein nicht dargestellter Deckel, der auf ein Außengewinde 55 des Stutzens 54 aufschraubbar ist.

Ferner befindet sich an der Innenseite des Oberbodens 51 ein Belüftungskanal 57. Der Belüftungskanal 57 unterteilt sich in einen horizontalen Abschnitt 58 und in einen vertikalen Abschnitt 59.

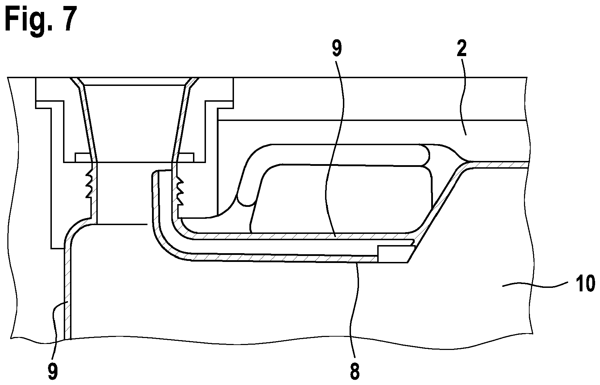

Der Belüftungskanal 57 ist durch eine äußere Kanalwandung 60 und eine innere Kanalwandung 61 gebildet. Die innere Kanalwandung 61 ist insbesondere durch ein Abquetschen des Vorformlings 106 gebildet. Hierzu werden Quetschkanten 8 (s. Fig. 7) an den Blasformhälften 2 verwendet. Die äußere Kanalwandung 60 ist insbesondere eine Außenwand des Kanisters 50.

Der Belüftungskanal 57 ragt mit seinem vertikalen Abschnitt 59 in den Stutzen 54. Vom Stutzen 54 aus erstreckt sich der vertikale Abschnitt 59 nach unten und geht in den horizontalen Abschnitt 58 über. Der horizontale Abschnitt 58 erstreckt sich in den hinteren Bereich des Kanisters 50 und mündet in den Innenraum 52. Der horizontale Abschnitt 58 muss dabei nicht exakt horizontal verlaufen, sondern kann auch geneigt verlaufen.

Dadurch, dass sich der Belüftungskanal 57 in den Stutzen 54 erstreckt, unterteilt die innere Kanalwandung 61 den Innenraum des Stutzens 54 in eine Hauptöffnung 62, durch die die Flüssigkeit beim Ein- und Ausgießen läuft, und in eine Belüftungsöffnung 63. Dabei ist insbesondere vorgesehen, dass die Belüftungsöffnung 63 im Querschnitt wesentlich kleiner ist als die Hauptöffnung 62. Insbesondere beträgt die Querschnittsfläche der Belüftungsöffnung 63 höchsten 25%, vorzugsweise höchstens 20%, der Querschnittsfläche der Hauptöffnung 62.

Fig. 7 zeigt einen Bereich einer der beiden Blasformhälften 2. Dabei ist zu sehen, dass in der Blasformhälfte 2 der entsprechende Teil des Formnestes 10 ausgebildet ist. Rund um das Formnest 10 verlaufen Schneidkanten 9, die zusammen mit den Schneidkanten der anderen Blasformhälfte 2 den Vorformling 106 verschließen und abtrennen.

Ferner zeigt Fig. 7, dass die Blasformhälften 2 jeweils eine Quetschkante 8 aufweisen, die den Vorformling 106 zur Bildung der inneren Kanalwandung 61 quetschen. Diese Quetschkanten 8 erstrecken sich entsprechend des vertikalen Abschnitts 59 des Belüftungskanals 57 auch in dem Bereich des Stutzens 54.

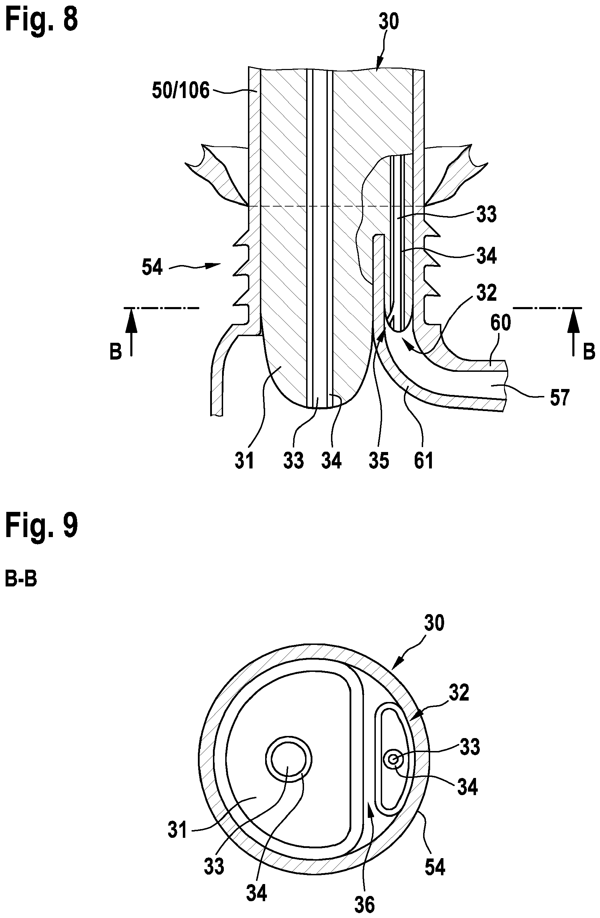

Fig. 8 zeigt, wie die Blasdornanordnung 30 im Kanister 50 steckt. Zur Verdeutlichung zeigt Fig. 9 den in Fig. 8 gekennzeichneten Schnitt B-B.

Die Blasdornanordnung 30 umfasst einen Hauptblasdorn 31 und einen Nebenblasdorn 32. Der Hauptblasdorn 31 befindet sich beim Schließen der Blasformhälften 2 und beim Aufblasen des Kanisters 50 im Bereich des Stutzens 54 und ist dabei formgebend für die Innenseite der Hauptöffnung 62. Gleichzeitig befindet sind der Nebenblasdorn 32 ebenfalls beim Schließen der Blasformhälften 2 und beim Aufblasen des Kanisters 50 im Bereich des Stutzens 54 und ist dabei formgebend für die Innenfläche der Belüftungsöffnung 63 bzw. des vertikalen Abschnitts 59 des Belüftungskanals 57.

Wie insbesondere der Schnitt B-B in Fig. 9 zeigt, sind der Hauptblasdorn 31 und der Nebenblasdorn 32 um einen Quetschkantenspalt 36 voneinander beabstandet. Da sich die Blasdornanordnung 30 beim Schließen der Blasformhälften 2 bereits an Ort und Stelle befindet, quetschen die beiden Quetschkanten 8 das Material in den Quetschkantenspalt 36. Dabei ragen die Quetschkanten 8 der Blasformhälften 2 ebenfalls in diesen Quetschkantenspalt 36. Durch die entsprechende Position des Nebenblasdorns 32 wird dabei kein Material in den zu entstehenden Belüftungskanal 57, insbesondere den vertikalen Abschnitt 59, verdrängt.

Die beiden Blasdorne 31, 32 weisen jeweils einen mittigen Blaskanal 33 zum Einblasen von Druckluft in den Innenraum 52 auf. Um den Blaskanal 33 ist jeweils ein Rückströmkanal 34 angeordnet.

Rein schematisch zeigt Fig. 8, dass der Nebenblasdorn 32 an seiner Unterseite einen schrägen Druckluftauslass 35 oder mehrere dieser schrägen Druckluftauslässe 35 aufweisen kann. Über diesen Druckluftauslass 35 wird Luft schräg zur Vertikalen 110 ausgeblasen. Dadurch kann etwaiges, in den entstehenden Belüftungskanal 57 gedrängtes Material weggeblasen werden, so dass der erwünschte Querschnitt des Belüftungskanals 57 entsteht.

Des Weiteren ist bevorzugt vorgesehen, dass zumindest eines der Greifelemente 4 eine Druckluftdüse aufweist, die ein Vorblasen des Vorformlings 106 vor Schließen der Blasformhälften 2 ermöglicht.

### Bezugszeichenliste

- 1: Blasform
- 2: Blasformhälften
- 3: Schlauchgreifer
- 4: Greifelemente
- 5: Greifbereiche
- 6: Federn
- 7: Haltevorrichtung
- 8: Quetschkante
- 9: Schneidekante
- 10: Formnest
- 11: Formschließrichtung
- 30: Blasdornanordnung
- 31: Hauptblasdorn
- 32: Nebenblasdorn
- 33: Blaskanal
- 34: Rückströmkanal
- 35: schräger Druckluftauslass
- 36: Quetschkantenspalt
- 50: Kanister
- 51: Oberboden
- 52: Innenraum
- 53: Griff
- 54: Stutzen
- 55: Außengewinde
- 56: oberer Abschluss
- 57: Belüftungskanal
- 58: horizontaler Abschnitt
- 59: vertikaler Abschnitt
- 60: äußere Kanalwandung
- 61: innere Kanalwandung
- 62: Hauptöffnung
- 63: Belüftungsöffnung
- 64: Mantelfläche
- 100: Anordnung
- 101: Blaskopf
- 102: Schlauch
- 103: Trennvorrichtung
- 104: Einfahröffnung
- 105: Blasposition
- 106: Vorformling
- 110: Vertikale
- 111: Horizontale

## Patentansprüche

1. Verfahren zum Herstellung eines Kanisters (50) aus Kunststoff, umfassend die folgenden Schritte:
• Kontinuierliches Extrudieren eines Schlauches (102),
• Positionieren einer geöffneten Blasform (1) um den Schlauch (102), sodass sich der Schlauch (102) zwischen den beiden Blasformhälften (2) befindet,
• Schließen eines an der Blasform (1) angeordneten Schlauchgreifers (3) zum Einklemmen des Schlauches (102) und gleichzeitigem Offenhalten des Schlauches (102) an seiner Oberseite zur Bildung einer Einfahröffnung (104),
• Trennen des Schlauches (102) oberhalb des Schlauchgreifers (3) zur Bildung des Vorformlings (106),
• horizontales Verfahren der Blasform (1) samt darin hängendem, vom Schlauchgreifer (3) gehaltenem Vorformling (106) in eine Blasposition (105),
• Einfahren einer Blasdornanordnung (30) von oben in die Einfahröffnung (104) des Vorformlings (106),
• Schließen der Blasformhälften (2),
• Aufblasen des Vorformlings (106) in der Blasform (1) zu einem Kanister (50)
• wobei der Schlauchgreifer (3) den Schlauch (102) mit zwei Greifbereichen (5) an zwei voneinander beabstandeten Stellen klemmt, sodass die Einfahröffnung (104) einen ovalen Querschnitt aufweist.

2. Verfahren (59) nach Anspruch 1,
• wobei der Kanister (50) einen Stutzen (54) zum Ein- und Ausgießen aufweist,
• wobei in den Stutzen (54) ein vertikaler Abschnitt (59) eines Belüftungskanals (57) des Kanisters (50) ragt,
• wobei die Blasdornanordnung (30) beim Schließen der Blasformhälften (2) mit einem Hauptblasdorn (31) für den Stutzen (54) und mit einem Nebenblasdorn (32) für den vertikalen Abschnitt (59) des Belüftungskanals (57) formgebend ist.

3. Verfahren nach einem der vorhergehenden Ansprüche, wobei der Schlauchgreifer (3) auf jeder Blasformhälfte (2) zumindest ein Greifelement (4) umfasst, wobei der Schlauch (102) zwischen den Greifelementen (4) einklemmbar ist.

4. Verfahren nach Anspruch 3, wobei die Greifelemente (4) in Schließrichtung mittels Federn (6) federbelastet sind, wobei zum Einklemmen des Schlauches (102) die Federn (6) entspannt werden, wobei beim Schließen der Blasformhälften (2) die Federn (6) gespannt werden, und wobei beim Öffnen der Blasformhälften (2) die Federn (6) im gespannten Zustand gehalten werden.

5. Verfahren nach einem der vorhergehenden Ansprüche, wobei die beiden Greifbereiche (5) nach dem Einklemmen zur Formveränderung der Einfahröffnung (104) aufeinander zu verfahren werden.

6. Verfahren nach einem der vorhergehenden Ansprüche, wobei in den Vorformling (106) vor dem Schließen der Blasformhälften (2) Druckluft zum Vorblasen des Vorformlings (106) eingeblasen wird; vorzugsweise über zumindest eine Druckluftdüse an zumindest einem der Greifelemente (4).

7. Verfahren nach Anspruch 6, wobei der Vorformling (106) beim Vorblasen über das Innenformmaß der Blasform (1) hinaus aufgeblasen wird.

8. Verfahren nach einem der vorhergehenden Ansprüche, wobei die Blasdornanordnung (30) nach dem Einfahren in die Einfahröffnung (104) und vor dem Schließen der Blasformhälften (2) horizontal verfahren wird.

9. Verfahren nach einem der Ansprüche 2 bis 8, wobei der Nebenblasdorn (32) an seiner Unterseite zumindest einen schräg angeordneten Druckluftauslass (35) aufweist und beim Aufblasen des Kanisters (50) über diesen Druckluftauslass (35) zur unterstützenden Ausformung des Belüftungskanals (57) Material weggeblasen wird.

10. Blasform (1) zur Herstellung eines Kanisters (50) aus Kunststoff, insbesondere für die Durchführung des Verfahrens nach einem der vorhergehenden Ansprüche, umfassend:
• zwei Blasformhälften (2), formgebend für den Kanister (50),
• und einen Schlauchgreifer (3) mit zumindest einem Greifelement (4) auf der Oberseite der einen Blasformhälfte (2) und zumindest einem gegenüberliegenden Greifelement (4) auf der Oberseite der anderen Blasformhälfte (2),
• wobei die Greifelemente (4) relativ zur Blasformhälfte (2) verfahrbar sind, sodass ein zwischen den geöffneten Blasformhälften (2) angeordneter Schlauch (102) von den Greifelementen (4) einklemmbar ist, ohne die Blasformhälften (2) zu schließen,
• **dadurch gekennzeichnet, dass** der Schlauchgreifer (3) zwei Greifbereiche (5), jeweils zum Einklemmen des Schlauches (102), aufweist, wobei die beiden Greifbereiche (5) zur Bildung einer Einfahröffnung (104) mit ovalem Querschnitt im Schlauch (102) voneinander beabstandet sind.

11. Blasform nach Anspruch 10, umfassend pro Greifelement (4) zumindest eine Feder (6), die das Greifelement (4) in Schließrichtung beaufschlagt, und eine Haltevorrichtung (7), ausgebildet zum Halten und Freigeben des federbeaufschlagten Greifelements (4).

12. Blasform nach einem der Ansprüche 10 oder 11, wobei die beiden Greifbereiche (5) zur Formveränderung der Einfahröffnung (104) aufeinander zu verfahrbar sind.

## Claims

1. A method of manufacturing a container (50) made of plastic, comprising the following steps:
- continuously extruding a hose (102),
- positioning an opened blow mold (1) around the hose (102), so that the hose (102) is arranged between two blow mold halves (2),
- closing a hose gripper (3) arranged at the blow mold (1) to clamp the hose (102) and simultaneously holding the hose (102) open on its upper side to form an inlet opening (104),
- separating the hose (102) above the hose gripper (3) to form a preform (106),
- horizontally moving the blow mold (1) together with the preform (106) hanging therein and held by the hose gripper (3) in a blowing position (105),
- inserting a blow mandrel assembly (30) from above into the inlet opening (104) of the preform (106),
- closing the blow mold halves (2), and
- inflating the preform (106) in the blow mold (1) to form a container (50),
- wherein the hose gripper (3) clamps the hose (102) with two gripping areas (5) at two locations spaced apart from each other, so that the inlet opening (104) comprises an oval cross-section.

2. The method (59) according to claim 1,
- wherein the container (50) has a spout (54) for pouring in and out,
- wherein a vertical portion (59) of a venting channel (57) of the container (50) projects into the spout (54),
- wherein the blow mandrel assembly (30) is formed with a main blow mandrel (31) for the spout (54) and with an ancillary blow mandrel (32) for the vertical portion (59) of the venting channel (57) when closing the blow mold halves (2).

3. The method according to any of the preceding claims, wherein the hose gripper (3) comprises at least one gripping element (4) at each blow mold half (2), wherein the hose (102) can be clamped between the gripping elements (4).

4. The method according to claim 3, wherein the gripping elements (4) are spring-loaded in a closing direction by means of springs (6), wherein the springs (6) are released to clamp the hose (102), wherein the springs (6) are tensioned when closing the blow mold halves (2), and wherein the springs (6) are held in the tensioned state when opening the blow mold halves (2).

5. The method according to any of the preceding claims, wherein the two gripping areas (5) are moved towards each other after clamping to change the form of the inlet opening (104).

6. The method according to any of the preceding claims, wherein compressed air is blown into the preform (106) for preblowing the preform (106) before closing the blow mold halves (2); preferably via at least one compressed air nozzle at at least one of the gripping elements (4).

7. The method according to claim 6, wherein the preform (106) is inflated beyond the inner mold dimension of the blow mold (1) when preblowing.

8. The method according to any of the preceding claims, wherein the blow mandrel assembly (30) is moved horizontally after entering the inlet opening (104) and before closing the blow mold halves (2).

9. The method according to any of claims 2 to 8, wherein the ancillary blow mandrel (32) comprises at least one obliquely arranged compressed air outlet (35) on its underside and blows material away when inflating the container (50) via said compressed air outlet (35) to support forming of the ventilation channel (57).

10. The blow mold (1) for producing a container (50) made of plastic, in particular for performing the method according to one of the preceding claims, comprising:
- two blow mold halves (2), arranged to form the container (50),
- and a hose gripper (3) with at least one gripping element (4) on the upper side of one blow mold half (2) and at least one opposite gripping element (4) on the upper side of the other blow mold half (2),
- wherein the gripping elements (4) can be moved relative to the blow mold half (2), so that a hose (102) arranged between the opened blow mold halves (2) can be clamped by the gripping elements (4), without closing the blow mold halves (2),
- **characterized in that** the hose gripper (3) comprises two gripping areas (5), each for clamping the hose (102), wherein the two gripping areas (5) are spaced apart to form an inlet opening (104) with an oval cross-section in the hose (102).

11. The blow mold according to claim 10, comprising at least one spring (6) per gripping element (4), which biases the gripping element (4) in the closing direction, and a holding device (7), arranged to hold and release the spring-loaded gripping element (4).

12. The blow mold according to claim 10 or 11, wherein the two gripping areas (5) are movable towards each other to change the form of the inlet opening (104).

## Revendications

1. Procédé de fabrication d'un bidon (50) en matière plastique, comprenant les étapes suivantes :
- l'extrusion continue d'un tuyau flexible (102),
- le positionnement d'un moule de soufflage (1) ouvert autour du tuyau flexible (102) de sorte que le tuyau flexible (102) se trouve entre les deux moitiés de moule de soufflage (2),
- la fermeture d'une pince de tuyau flexible (3) agencée au niveau du moule de soufflage (1) pour le serrage du tuyau flexible (102) et le maintien ouvert simultané du tuyau flexible (102) au niveau de son côté supérieur pour la formation d'une ouverture d'entrée (104),
- la séparation du tuyau flexible (102) au-dessus de la pince de tuyau flexible (3) pour la formation de l'ébauche (106),
- le déplacement horizontal du moule de soufflage (1) avec l'ébauche (106) s'accrochant dans celui-ci, maintenue par la pince de tuyau flexible (3) dans une position de soufflage (105),
- l'entrée d'un agencement d'épine de soufflage (30) de dessus dans l'ouverture d'entrée (104) de l'ébauche (106),
- la fermeture des moitiés de moule de soufflage (2),
- le soufflage de l'ébauche (106) dans le moule de soufflage (1) pour former un bidon (50),
- dans lequel la pince de tuyau flexible (3) serre le tuyau flexible (102) avec deux zones de préhension (5) au niveau de deux points espacés l'un de l'autre de sorte que l'ouverture d'entrée (104) présente une section transversale ovale.

2. Procédé (59) selon la revendication 1,
- dans lequel le bidon (50) présente une tubulure (54) pour le versement et le déversement,
- dans lequel une section verticale (59) d'un canal de ventilation (57) du bidon (50) pénètre dans la tubulure (54),
- dans lequel l'agencement d'épine de soufflage (30) réalise le formage lors de la fermeture des moitiés de moule de soufflage (2) avec une épine de soufflage principale (31) pour la tubulure (54) et avec une épine de soufflage accessoire (32) pour la section verticale (59) du canal de ventilation (57).

3. Procédé selon l'une quelconque des revendications précédentes, dans lequel la pince de tuyau flexible (3) comporte sur chaque moitié de moule de soufflage (2) au moins un élément de préhension (4), dans lequel le tuyau flexible (102) peut être serré entre les éléments de préhension (4).

4. Procédé selon la revendication 3, dans lequel les éléments de préhension (4) sont sollicités par ressort dans le sens de fermeture au moyen de ressorts (6), dans lequel pour le serrage du tuyau flexible (102) les ressorts (6) sont détendus, dans lequel lors de la fermeture des moitiés de moule de soufflage (2) les ressorts (6) sont tendus, et dans lequel lors de l'ouverture des moitiés de moule de soufflage (2) les ressorts (6) sont maintenus dans l'état tendu.

5. Procédé selon l'une quelconque des revendications précédentes, dans lequel les deux zones de préhension (5) sont déplacées après le serrage pour la modification de forme de l'ouverture d'entrée (104) l'une vers l'autre.

6. Procédé selon l'une quelconque des revendications précédentes, dans lequel de l'air comprimé est soufflé dans l'ébauche (106) avant la fermeture des moitiés de moule de soufflage (2) pour le présoufflage de l'ébauche (106) ; de préférence par le biais d'au moins une buse d'air comprimé au niveau d'au moins un des éléments de préhension (4).

7. Procédé selon la revendication 6, dans lequel l'ébauche (106) est soufflée lors du présoufflage au-delà de la mesure de moule intérieure du moule de soufflage (1).

8. Procédé selon l'une quelconque des revendications précédentes, dans lequel l'agencement d'épine de soufflage (30) est déplacé horizontalement après l'entrée dans l'ouverture d'entrée (104) et avant la fermeture des moitiés de moule de soufflage (2).

9. Procédé selon l'une quelconque des revendications 2 à 8, dans lequel l'épine de soufflage accessoire (32) présente au niveau de son côté inférieur au moins une sortie d'air comprimé (35) agencée en biais et du matériau est évacué par soufflage lors du soufflage du bidon (50) par le biais de cette sortie d'air comprimé (35) pour le démoulage en appui du canal de ventilation (57).

10. Moule de soufflage (1) pour la fabrication d'un bidon (50) en matière plastique, en particulier pour la réalisation du procédé selon l'une quelconque des revendications précédentes, comprenant :
- deux moitiés de moule de soufflage (2), réalisant le formage pour le bidon (50),
- et une pince de tuyau flexible (3) avec au moins un élément de préhension (4) sur le côté supérieur de l'une moitié de moule de soufflage (2) et au moins un élément de préhension (4) opposé sur le côté supérieur de l'autre moitié de moule de soufflage (2),
- dans lequel les éléments de préhension (4) sont déplaçables par rapport à la moitié de moule de soufflage (2) de sorte qu'un tuyau flexible (102) agencé entre les moitiés de moule de soufflage (2) ouvertes puisse être serré par les éléments de préhension (4) sans fermer les moitiés de moule de soufflage (2),
- **caractérisé en ce que** la pince de tuyau flexible (3) présente deux zones de préhension (5) respectivement pour le serrage du tuyau flexible (102), dans lequel les deux zones de préhension (5) sont espacées l'une de l'autre pour la formation d'une ouverture d'entrée (104) avec une section transversale ovale dans le tuyau flexible (102).

11. Moule de soufflage selon la revendication 10, comprenant par élément de préhension (4) au moins un ressort (6) qui sollicite l'élément de préhension (4) dans le sens de fermeture, et un dispositif de maintien (7) réalisé pour le maintien et la libération de l'élément de préhension (4) sollicité par ressort.

12. Moule de soufflage selon l'une quelconque des revendications 10 ou 11, dans lequel les deux zones de préhension (5) sont déplaçables pour la modification de forme de l'ouverture d'entrée (104) l'une vers l'autre.
